# DEMANDE DE BREVET EUROPEEN

(11) **EP 1 667 400 A1**
(43) Date de publication de la demande: **07.06.2006**
(21) Numéro de dépôt: 05300968.4
(22) Date de dépôt: 28.11.2005
(51) Int. Cl.: H04L 29/06, H04L 29/12

(54) **Détermination d'adresses IP de noeuds GGSN de réseaux de communication, en fonction de critères de proximité et de disponibilité, en vue de l'activation de contexte(s) PDP**

(30) Priorité: 02.12.2004 FR 0452835
(71) Demandeur: ALCATEL, 75008 Paris (FR)
(72) Inventeur: Gondel, Antoine, 92370, CHAVILLE (FR)
(74) Mandataire: El Manouni, Josiane

(57) **Abrégé**

Un noeud SGSN (SGSN1) appartient à un réseau de coeur (CN) d'un réseau de communication mobile (R1) comportant un réseau fédérateur (RF) hébergeant un serveur de noms de domaine (DNS) stockant des identifiants de noms (APN) de point d'accès à au moins un réseau de communication externe (R2), raccordé au réseau de coeur (CN), en correspondance d'adresses IP de noeuds GGSN dans chacun desquels est activé au moins un nom de point d'accès (APN). Ce noeud SGSN (SGSN1) comprend des moyens de gestion (MG) chargés, en cas de réception d'une requête d'activation de contexte PDP contenant un identifiant de nom de point d'accès (APN) et provenant d'une station mobile (M2), de générer à destination du serveur (DNS) une demande requérant la transmission d'un ensemble d'adresses IP de noeuds GGSN dans lesquels est activé le nom de point d'accès (APN) désigné dans la requête reçue, puis, à réception de cet ensemble, de sélectionner l'une au moins des adresses IP de noeud GGSN qu'elle contient en fonction au moins d'un critère de proximité choisi et d'un critère de disponibilité choisi, de manière à permettre l'activation d'un contexte PDP entre la station mobile (SM2) et le noeud GGSN dont l'adresse IP a été sélectionnée.

## Description

L'invention concerne les réseaux de communication mobiles et plus particulièrement l'activation de contextes PDP (« Packet Data Protocol », comme par exemple le protocole IP pour « Internet Protocol ») au sein de tels réseaux.

Comme le sait l'homme de l'art, certains réseaux de communication mobiles (éventuellement cellulaires), comme par exemple les réseaux UMTS ou GPRS/EDGE, peuvent être raccordés à d'autres réseaux de communication publics et/ou privés, dits « réseaux externes », comme par exemple le réseau Internet. Cela permet notamment à leurs clients d'accéder à des terminaux ou serveurs externes, au moyen de leurs propres terminaux (ou stations) mobiles.

Le raccordement à des réseaux externes est assuré par le réseau de coeur (ou « Core Network ») des réseaux de communication mobiles, et plus précisément par certains de leurs équipements de réseau, tels que des routeurs ou des noeuds de type GGSN (« Gateway GPRS Serving Node »), sous le contrôle d'autres équipements de réseau, tels que des noeuds de type SGSN (« Service GPRS Serving Node »). Le réseau de coeur comprend également un réseau fédérateur (ou « backbone ») auquel sont raccordés ses différents noeuds SGSN et GGSN.

Un noeud SGSN assure notamment l'interface et le transfert de paquets de données ascendants et descendants entre le réseau d'accès radio de son réseau mobile et le réseau de coeur, qui donne accès aux réseaux externes.

Il est ici rappelé que le réseau d'accès radio (appelé UTRAN dans le cas d'un réseau UMTS et BSS dans le cas d'un réseau GPRS/EDGE) comprend des noeuds ou contrôleurs de réseau (radio) (appelés RNCs (pour « Radio Network Controllers ») dans le cas d'un réseau UMTS et BSCs (pour « Base Station Controllers ») dans le cas d'un réseau GPRS/EDGE), chargés de gérer l'allocation des ressources ou canaux logiques du réseau (tels que les canaux de liaison radio ou les codes de canalisation) en vue de l'établissement de services entre des terminaux mobiles et le réseau de coeur. Un service constitue par exemple une connexion pouvant être utilisée pour la transmission de données entre le réseau mobile et un terminal mobile.

Un noeud GGSN est habituellement couplé à au moins un noeud SGSN et assure le rôle d'interface logique entre le réseau mobile et les réseaux externes. En d'autres termes, un noeud GGSN est chargé d'assurer la connectivité d'au moins un réseau mobile avec un ou plusieurs réseaux externes.

Pour qu'un noeud GGSN puisse assurer la connectivité avec un réseau Internet, il doit disposer d'un objet logique activé (ou « instancié ») désignant ledit réseau Internet et appelé « nom de point d'accès », plus connu sous l'acronyme anglais APN (« Access Point Name »).

Afin qu'un terminal (ou station) mobile puisse accéder à un réseau externe, comme par exemple un réseau Internet, on doit activer entre ce terminal mobile et le GGSN ce que l'homme de l'art appelle un contexte PDP (ou « PDP context »).

L'activation d'un contexte PDP est initiée par un noeud SGSN du réseau mobile. Elle se déroule conformément aux étapes décrites ci-après :
- une fois l'allocation de ressources effectuée, le terminal mobile concerné transmet au noeud SGSN dont il dépend une requête d'activation de contexte PDP contenant des informations comme la qualité de service (QoS) requise, l'identifiant de l'APN du réseau externe (IP) pour lequel une connectivité est demandée, un identifiant d'utilisateur, ainsi qu'éventuellement l'adresse (IP) dudit terminal mobile si celle-ci est statique.
- Le noeud SGSN vérifie ensuite que l'utilisateur est enregistré auprès du réseau mobile, puis, si la requête est valide il transmet à un serveur de noms de domaines (ou DNS pour « Domain Name System »), raccordé au réseau fédérateur, une demande contenant l'identifiant d'APN reçu.
- Le serveur DNS dispose d'une table de correspondance dans laquelle les différents identifiants d'APN, des différents réseaux externes raccordés au réseau de coeur, sont stockés en correspondance d'adresses (IP) de noeuds GGSN contenant ces APNs. Le serveur DNS détermine alors dans sa table de correspondance les adresses (IP) de l'ensemble des noeuds GGSN disposant de l'APN désigné et par conséquent susceptibles de fournir la connectivité avec le réseau externe (IP) correspondant. Puis, il transmet au noeud SGSN concerné chaque adresse (IP) de noeud GGSN déterminée.
- Le noeud SGSN choisit alors l'une des adresses (IP) de noeuds GGSN reçues, en général la première, puis requiert auprès du noeud GGSN correspondant à cette adresse (IP) choisie l'établissement d'une connexion tunnel entre eux.
- Le noeud GGSN complète l'établissement de la connexion tunnel et renvoie à destination du terminal mobile concerné une adresse (IP), puis il associe le tunnel à la connexion au réseau externe (IP). Une connexion virtuelle étant ainsi établie entre le terminal mobile et le noeud GGSN, et le noeud GGSN disposant d'une association entre le tunnel et l'interface physique raccordée au réseau externe, un transfert de données peut alors se faire entre le terminal mobile concerné et le réseau externe (IP).

Les réseaux mobiles de grande taille disposent de plusieurs entités, appelées points de présence (ou POP pour « Point Of Presence ») et comprenant chacune un noeud GGSN, généralement couplé à au moins un noeud SGSN et comportant un même APN activé (ou instancié) associé au réseau Internet. Ainsi, les différents points de présence d'un réseau mobile offrent tous la connectivité vers le réseau Internet, ce qui permet de répartir le trafic entre eux, de façon sensiblement égale.

Cette répartition de trafic sensiblement égale est pénalisante. En effet, elle induit un trafic important au niveau du réseau fédérateur, notamment entre les noeuds SGSN et les différents noeuds GGSN, alors même que bon nombre des noeuds sont couplés localement à un noeud GGSN au sein d'un point de présence. Cet inconvénient, qui croît avec le nombre de points de présence implantés dans les réseaux mobiles, empêche la mise en oeuvre au sein de ces derniers d'une politique de redondance qui permettrait d'offrir des noeuds GGSN de secours en cas de défaillance de l'un de leurs points de présence.

L'invention a donc pour but d'améliorer la situation.

Elle propose à cet effet un noeud SGSN pour un réseau de coeur d'un réseau de communication mobile comportant un réseau fédérateur hébergeant un serveur DNS stockant des identifiants de noms de point d'accès à au moins un réseau de communication externe, raccordé au réseau de coeur, en correspondance d'adresses IP de noeuds GGSN dans chacun desquels est activé au moins un nom de point d'accès (APN).

Ce noeud SGSN se caractérise par le fait qu'il comprend des moyens de gestion chargés, lorsqu'ils reçoivent d'une station mobile une requête d'activation de contexte PDP contenant un identifiant de nom de point d'accès (APN), de générer à destination du serveur DNS une demande requérant la transmission d'un ensemble d'adresses IP de noeuds GGSN dans lesquels est activé le nom de point d'accès (APN) désigné dans la requête reçue, puis, de sélectionner l'une au moins des adresses IP de noeud GGSN que contient l'ensemble reçu en fonction au moins d'un critère de proximité choisi et d'un critère de disponibilité choisi, afin de permettre l'activation d'un contexte PDP entre la station mobile concernée et le noeud GGSN dont l'adresse IP a été sélectionnée.

Le noeud selon l'invention peut comporter d'autres caractéristiques qui peuvent être prises séparément ou en combinaison, et notamment :
- ses moyens de gestion peuvent être chargés de comparer le préfixe de l'adresse IP qui est associée à leur noeud SGSN au préfixe de chaque adresse IP de noeud GGSN de l'ensemble reçu, et de sélectionner l'adresse IP du noeud GGSN qui satisfait au moins au critère de disponibilité et qui est le plus proche : cette plus grande proximité est ici déterminée par rapport au préfixe du noeud GGSN qui présente la plus grande portion commune avec le préfixe de leur noeud SGSN,
   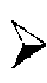 ses moyens de gestion peuvent être chargés de comparer les préfixes de manière à établir une liste d'adresses IP de noeuds GGSN, classées en fonction des longueurs des portions communes que présentent leurs préfixes respectifs avec le préfixe de leur noeud SGSN, puis de sélectionner dans la liste l'adresse IP qui est la mieux classée parmi celles qui sont associées à un noeud GGSN satisfaisant au moins au critère de disponibilité,
   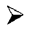 lorsqu'on ne veut pas favoriser une proximité géographique, les moyens de gestion peuvent être chargés d'attribuer à leur noeud SGSN une adresse IP nulle et factice, puis de comparer le préfixe de cette dernière au préfixe de chaque adresse IP de noeud GGSN de l'ensemble reçu, et de sélectionner plusieurs adresses IP de noeuds GGSN qui satisfont au moins au critère de disponibilité, afin de permettre l'activation de contextes PDP entre la station mobile concernée et chaque noeud GGSN dont l'adresse IP a été sélectionnée, en vue d'une répartition de trafic entre ces noeuds GGSN,
- ses moyens de gestion peuvent être chargés de sélectionner une adresse IP de noeud GGSN en fonction d'au moins un critère supplémentaire choisi parmi un ensemble de préfixes préférentiels, un ensemble de préfixes interdits, un ensemble de longueurs de portion de préfixe préférentielles, et un ensemble de longueurs de portion de préfixe interdites,
- des moyens de mémorisation peuvent stocker des informations représentatives de l'état de disponibilité de chaque noeud GGSN, ainsi qu'éventuellement des définitions d'ensembles participant à un critère supplémentaire de sélection.

L'invention propose également un procédé de détermination de noeuds GGSN pour l'activation de contextes PDP par des noeuds SGSN, consistant :
- à transmettre à un noeud SGSN une requête d'activation de contexte PDP contenant un identifiant de nom de point d'accès et provenant d'une station mobile,
- à générer dans ce noeud SGSN une demande requérant la transmission d'un ensemble d'adresses IP de noeuds GGSN dans lesquels est activé le nom de point d'accès désigné dans la requête reçue,
- à transmettre ce message au serveur DNS de sorte qu'il détermine l'ensemble requis en fonction de l'identifiant d'APN qu'il contient et le transmette au noeud SGSN,
- à sélectionner dans le noeud SGSN, l'une au moins des adresses IP de noeud GGSN, qui sont contenues dans l'ensemble transmis par le serveur DNS, en fonction au moins d'un critère de proximité choisi et d'un critère de disponibilité choisi, en vue de l'activation d'un contexte PDP entre la station mobile concernée et le noeud GGSN dont l'adresse IP a été sélectionnée.

Le procédé selon l'invention peut comporter d'autres caractéristiques qui peuvent être prises séparément ou en combinaison, et notamment :
- on peut comparer le préfixe de l'adresse IP associée au noeud SGSN au préfixe de chaque adresse IP de noeud GGSN de l'ensemble transmis, et sélectionner l'adresse IP, du noeud GGSN qui satisfait au moins au critère de disponibilité, et dont le préfixe présente la plus grande portion commune avec le préfixe du noeud SGSN,
   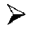 on peut comparer les préfixes de manière à établir une liste d'adresses IP de noeuds GGSN, classées en fonction des longueurs des portions communes que présentent leurs préfixes respectifs avec le préfixe du noeud SGSN, puis sélectionner dans cette liste l'adresse IP qui est la mieux classée parmi celles qui sont associées à un noeud GGSN satisfaisant au moins au critère de disponibilité,
- en l'absence de portion commune, on peut attribuer au noeud SGSN une adresse IP nulle et factice, puis comparer le préfixe de cette dernière au préfixe d'adresse IP de chaque noeud GGSN de l'ensemble transmis, et sélectionner plusieurs adresses IP de noeuds GGSN qui satisfont au moins au critère de disponibilité, en vue de l'activation de contextes PDP entre la station mobile concernée et chaque noeud GGSN dont l'adresse IP a été sélectionnée, afin de répartir le trafic provenant de la station mobile entre ces noeuds GGSN,
- on peut sélectionner une adresse IP de noeud GGSN en fonction d'au moins un critère supplémentaire choisi dans un groupe comprenant un ensemble de préfixes préférentiels, un ensemble de préfixes interdits, un ensemble de longueurs de portion de préfixe préférentielles, et un ensemble de longueurs de portion de préfixe interdites.

L'invention est particulièrement bien adaptée, bien que de façon non exclusive, aux réseaux de communication mobiles, de type cellulaire, et plus précisément de type UMTS ou GPRS/EDGE, ainsi qu'aux réseaux locaux sans fils (ou WLAN) en particulier dans une architecture de type UMA (pour « Unlicensed Mobile Access »).

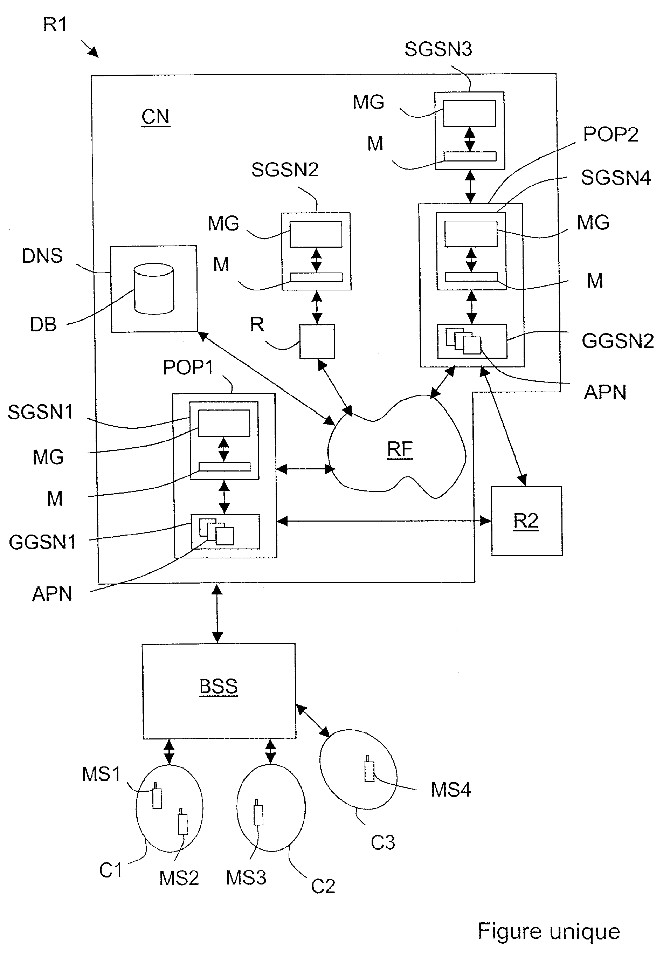

D'autres caractéristiques et avantages de l'invention apparaîtront à l'examen de la description détaillée ci-après, et du dessin annexé, sur lequel l'unique figure illustre de façon très schématique un ensemble de réseaux de communication comprenant un réseau mobile muni d'un réseau de coeur équipé de noeuds SGSN selon l'invention. Le dessin annexé pourra non seulement servir à compléter l'invention, mais aussi contribuer à sa définition, le cas échéant.

L'invention a pour objet de permettre la mise en oeuvre au sein de réseaux de communication mobiles d'une politique de redondance de noeuds GGSN d'activation de contexte PDP, dans le but notamment de disposer de noeud(s) GGSN de secours en cas de défaillance d'un point de présence (POP).

Dans ce qui suit, on considère à titre d'exemple non limitatif que le réseau de communication mettant en oeuvre l'invention est un réseau mobile de type cellulaire, tel qu'un réseau GPRS ou EDGE. Mais l'invention n'est pas limitée à ce type de réseau mobile. Elle concerne tout type de réseau mobile, notamment cellulaire, comme par exemple les réseaux UMTS, ainsi que les réseaux locaux sans fils (ou WLAN pour « Wireless Local Area Network ») en particulier dans une architecture de type UMA.

On a représenté sur l'unique figure, de façon très schématique, une partie d'un ensemble de réseaux de communication constitué d'un réseau GPRS R1 et d'un réseau de communication dit « externe » R2, comme par exemple le réseau Internet.

On assimilera dans ce qui suit, à titre d'exemple non limitatif, le réseau Internet R2 à un serveur dans lequel sont stockées des données d'information auxquelles veut accéder un terminal mobile. Mais, ce réseau Internet R2 peut se présenter sous toute autre forme.

Il est important de noter que le réseau GPRS R1 peut être raccordé à plusieurs réseaux externes, publics et/ou privés.

Comme cela est illustré sur l'unique figure, le réseau GPRS peut, d'une façon très schématique mais néanmoins suffisante à la compréhension de l'invention, être résumé à un réseau d'accès radio ou BSS (pour « Base Station System) couplé par une interface à un réseau de coeur ou CN (pour « Core Network »).

Le réseau d'accès radio BSS comporte un ensemble de stations de base (appelées BTSs) et de contrôleurs de réseau radio (appelés BSCs), raccordés entre eux, ainsi qu'à un gestionnaire de réseau d'accès.

Chaque station de base (BTS) est associée à au moins une cellule Ci couvrant une zone radio dans laquelle des terminaux (ou stations) mobiles MSj peuvent établir (ou poursuivre) des liaisons radio.

Dans l'exemple illustré, trois cellules Ci (C1-C3, i = 1 à 3) ont été représentées. Mais, l'indice i peut prendre n'importe quelle valeur non nulle. Par ailleurs, dans l'exemple illustré quatre terminaux (ou stations) mobiles MSj (MS1-MS4, j = 1 à 4) ont été représentés. Mais, l'indice j peut prendre n'importe quelle valeur non nulle.

On entend ici par « terminal (ou station) mobile » tout équipement de réseau, mobile ou itinérant, capable d'échanger des données avec le réseau de coeur CN, via le réseau d'accès radio BSS auquel est rattachée la cellule Ci dans laquelle il est momentanément situé. Par conséquent, il pourra notamment s'agir de téléphones mobiles, d'assistants numériques personnels (ou PDAs pour « Personal Digital Assistants ») ou d'ordinateurs portables équipés d'une interface radio de communication. Dans ce qui suit on considère à titre d'exemple non limitatif que les terminaux mobiles MSj sont des téléphones mobiles capables d'échanger des données selon un protocole de communication, comme par exemple le protocole WAP (pour « Wireless Application Protocol »).

Le réseau de coeur CN comprend un ensemble d'équipements de réseau, raccordé aux contrôleurs de réseau radio (BSCs) du réseau d'accès radio BSS ainsi qu'à un gestionnaire de réseau de coeur (non représenté) et un réseau fédérateur (ou « backbone ») RF. L'ensemble d'équipements de réseau comprend notamment des noeuds de type GGSN (« Gateway GPRS Serving Node ») et des noeuds de type SGSN (« Service GPRS Serving Node »), ainsi qu'éventuellement des routeurs R, qui sont tous raccordés au réseau fédérateur RF.

Le réseau fédérateur (ou « backbone ») RF héberge par ailleurs un serveur de noms de domaines DNS (« Domain Name System »).

Le serveur DNS comporte classiquement une base de données DB dans laquelle se trouve stockée une table établissant une correspondance entre des identifiants d'objets logiques permettant d'accéder à des réseaux externes, appelés noms de point d'accès ou APNs (pour « Access Point Names ») et implantés notamment dans des noeuds de type GGSN du réseau GPRS R1, et des adresses IP (« Internet Protocol ») desdits noeuds GGSN. En d'autres termes la table contient les adresses IP des noeuds GGSN dans lesquels sont activés (ou « instanciés ») un ou plusieurs APNs permettant chacun d'accéder à un réseau externe R2.

Dans l'exemple non limitatif illustré, le réseau de coeur CN comporte notamment quatre noeuds SGSN (SGSN1 à SGSN4), deux noeuds GGSN (GGSN1 et GGSN2) et un routeur R.

Il est rappelé qu'un noeud SGSN est notamment responsable des transferts de paquets de données ascendants et descendants entre le réseau d'accès radio BSS et les terminaux mobiles MSj des clients situés dans les cellules Ci.

Par ailleurs, il est rappelé qu'un noeud GGSN assure le rôle d'interface logique entre son réseau GPRS R1 et les réseaux externes (R2),. Il est donc chargé d'assurer la connectivité de son réseau GPRS R1 avec un ou plusieurs réseaux externes lorsqu'il comprend, sous une forme activée (ou instanciée), le ou les nom(s) de point d'accès ou APN(s) permettant d'accéder à ce ou ces réseau(x) externe(s).

Habituellement on appelle point de présence POP l'entité qui comporte un noeud GGSN comprenant l'APN activé permettant d'accéder au réseau Internet (ici R2). Comme cela est illustré, un tel point de présence POP comprend généralement un noeud SGSN couplé à son noeud GGSN. Ainsi, dans l'exemple illustré le réseau de coeur CN comprend un premier point de présence POP1 comportant un noeud SGSN SGSN1 couplé à un noeud GGSN GGSN1, et un second point de présence POP2 comportant un noeud SGSN SGSN4 couplé à un noeud GGSN GGSN2. Chacun de ces deux points de présence POP1 et POP2 accède au réseau R2.

Comme cela est également illustré, certains noeuds SGSN (ici SGSN2 et SGSN3) peuvent ne pas faire partie d'un point de présence POP. Dans ce cas, le noeud SGSN peut être soit couplé au réseau fédérateur RF par l'intermédiaire d'un routeur R, comme dans le cas du noeud SGSN SGSN2, soit couplé au réseau fédérateur RF par l'intermédiaire d'un point de présence POP, comme dans le cas du noeud SGSN SGSN3.

Comme indiqué dans la partie introductive, pour qu'un téléphone mobile MSj puisse accéder à un réseau externe à son réseau GPRS R1, par exemple au réseau Internet R2, un contexte PDP doit être activé entre ledit téléphone mobile MSj et un noeud GGSN du réseau de coeur CN, offrant la connectivité audit réseau Internet R2. Cette activation de contexte PDP est contrôlée par le noeud SGSN dont dépend la cellule Ci dans laquelle est momentanément situé le téléphone mobile MSj.

Les étapes du procédé d'activation d'un contexte PDP ayant été décrites dans la partie introductive, elles ne seront pas re-décrites ici. L'invention concerne une partie intermédiaire du procédé d'activation d'un contexte PDP, et plus précisément les étapes pendant lesquelles le noeud SGSN détermine un noeud GGSN consécutivement à la réception d'une requête d'activation de contexte PDP, désignant un APN associé à un réseau externe.

Plus précisément, selon l'invention, lorsqu'un noeud SGSN du réseau GPRS R1, par exemple SGSN1, reçoit d'un téléphone mobile, par exemple MS2, situé dans une cellule dont il assure la gestion, par exemple C1, une requête d'activation de contexte PDP, désignant un APN associé à un réseau externe, par exemple le réseau Internet R2, il la communique à son module de gestion MG. Ce dernier génère alors à destination du serveur DNS une demande contenant l'identifiant d'APN reçu, après avoir notamment vérifié que l'utilisateur du téléphone mobile MS2 était client du réseau GPRS R1. Cette demande est identique à celle utilisée dans les réseaux de l'art antérieur.

A réception de cette demande, le serveur DNS extrait l'identifiant d'APN qu'elle contient, puis il accède à sa base de données DB afin de déterminer l'adresse IP de chaque noeud GGSN dans lequel est activé l'APN dont l'identifiant a été extrait (et qui permet l'accès au réseau Internet R2).

Ces adresses IP de noeud GGSN constituent un ensemble que le serveur DNS transmet au noeud SGSN concerné, ici SGSN1. Dans l'exemple de réseau GPRS illustré, l'ensemble transmis par le serveur DNS comporte les adresses IP des deux noeuds GGSN GGSN1 et GGSN2. On considère en effet ici, à titre d'exemple illustratif, que les deux noeuds GGSN GGSN1 et GGSN2 comportent l'APN requis sous une forme activée.

A réception de l'ensemble d'adresses IP de noeud GGSN, le noeud SGSN SGSN1 le communique à son module de gestion MG afin qu'il sélectionne l'une (au moins) des adresses IP de noeud GGSN qu'il contient. Cette sélection se fait en fonction d'au moins un critère de proximité choisi et d'un critère de disponibilité choisi.

Le critère de disponibilité porte préférentiellement sur l'aptitude du noeud SGSN, ici SGSN1, à se connecter à un noeud GGSN. Afin de vérifier si ce critère est satisfait pour chaque noeud GGSN de l'ensemble reçu, le module de gestion MG du noeud SGSN, ici SGSN1, accède à une mémoire MC, généralement de type cache, dans laquelle se trouvent notamment stockées les adresses IP de tous les noeuds GGSN auxquels il peut se connecter.

Le critère de proximité porte préférentiellement sur les adresses IP des noeuds GGSN, contenues dans l'ensemble reçu, et l'adresse IP du noeud SGSN concerné, ici SGSN1.

Plus précisément, le module de gestion MG compare le préfixe de l'adresse IP qui est associée à son noeud SGSN, ici SGSN1, au préfixe de chaque adresse IP de noeud GGSN de l'ensemble reçu, ici SGSN1 et SGSN2, afin de déterminer l'éventuelle portion commune qu'ils présentent respectivement.

Il est rappelé qu'un noeud GGSN, qui appartient à un point de présence POP comportant un noeud SGSN, dispose d'un préfixe d'adresse IP qui présente une importante portion, contenant ses bits de poids les plus forts, identique à celle du préfixe du noeud SGSN. En d'autres termes, plus des noeuds sont proches physiquement, plus leurs préfixes présentent généralement une portion commune de grande longueur. Par conséquent, si l'on sélectionne un noeud GGSN proche d'un noeud SGSN (et donc disposant d'une portion de préfixe commune la plus importante possible) pour activer un contexte PDP, le trafic occasionné par cette activation et le trafic passant par la connexion issue de cette activation peuvent être directement transmis vers le réseau R2 sans charger le réseau fédérateur RF.

Par exemple, une fois que le module de gestion MG a déterminé chaque éventuelle portion de préfixe commune à son noeud SGSN et à l'un des noeuds GGSN de l'ensemble reçu, il établit de préférence une liste d'adresses IP de noeuds GGSN dans laquelle lesdites adresses IP sont classées en fonction des longueurs de portions de préfixe qu'elles ont respectivement en commun avec le préfixe dudit noeud SGSN.

Puis, le module de gestion MG sélectionne l'adresse IP du noeud GGSN qui satisfait au critère de disponibilité et qui est la mieux classée dans la liste (c'est-à-dire celle dont le préfixe présente la plus grande portion commune avec le préfixe de son noeud SGSN). Eventuellement, plusieurs noeuds GGSN peuvent être classés selon un même rang s'ils sont considérés comme situés à une distance équivalente suite à l'application de l'algorithme selon l'invention.

Dans l'exemple de réseau GPRS illustré, le noeud GGSN GGSN1 présente une portion de préfixe commune avec le noeud SGSN SGSN1 plus longue que celle du noeud GGSN GGSN2 avec le noeud SGSN SGSN4. En outre, on suppose que le noeud SGSN SGSN1 est connecté au noeud GGSN GGSN1. Par conséquent, le module de gestion MG du noeud SGSN SGSN1 sélectionne le noeud GGSN GGSN1 pour achever l'activation du contexte PDP requise par le téléphone mobile requérant, ici MS2.

Le noeud SGSN SGSN1 requiert ensuite auprès du noeud GGSN GGSN1, qui correspond à l'adresse IP sélectionnée, l'établissement d'une connexion tunnel entre eux. Le procédé d'activation du contexte PDP se poursuit ensuite jusqu'à l'établissement de la connexion virtuelle entre le téléphone mobile MS2 et le noeud GGSN GGSN1.

Grâce à ce procédé de détermination de noeuds GGSN d'activation de contexte PDP, un noeud SGSN dispose de noeuds GGSN de repli lui permettant de remplacer le noeud GGSN initialement sélectionné lorsque ce dernier est défaillant, ce qui confère une réelle souplesse au réseau GPRS.

Il est important de noter que si l'on ne veut pas définir de préférence géographique, le module de gestion MG peut attribuer à son noeud SGSN une adresse IP nulle et factice, ce qui conduit à un préfixe commun nul pour toutes les adresses reçues du serveur DNS.

Ainsi, lorsqu'il compare le préfixe de cette dernière aux préfixes des adresses IP de noeud GGSN de l'ensemble reçu, ils présentent les mêmes portions de préfixe communes.

Par conséquent, parmi l'ensemble des adresses IP des noeuds GGSN qui satisfont au critère de disponibilité et de même proximité (i.e. de même rang), le module de gestion MG en sélectionne une, suivant un algorithme par exemple de type « round-robin », et requiert auprès de son noeud SGSN l'établissement d'une connexion tunnel avec le noeud GGSN sélectionné. De la sorte, le trafic provenant du téléphone mobile MSj concerné peut être réparti entre les noeuds GGSN dont les adresses IP ont été sélectionnées.

Une telle situation correspond par exemple au cas du noeud SGSN SGSN2 du réseau GPRS R1 illustré sur l'unique figure.

Des critères de sélection supplémentaires peuvent être utilisés par le module de gestion MG. En effet, un opérateur de réseau peut par exemple préférer que l'un au moins des noeuds SGSN de son réseau active des contextes PDP auprès d'un ensemble choisi de noeuds GGSN. Il peut également préférer que l'un au moins des noeuds SGSN de son réseau ne puisse pas activer des contextes PDP auprès d'un ensemble choisi de noeuds GGSN. Il peut également préférer que l'un au moins des noeuds SGSN de son réseau active des contextes PDP auprès d'un ensemble choisi de noeuds GGSN dont les préfixes d'adresse IP présentent une portion commune supérieure ou égale à une longueur choisie. Il peut également préférer que l'un au moins des noeuds SGSN de son réseau ne puisse pas activer des contextes PDP auprès d'un ensemble choisi de noeuds GGSN dont les préfixes d'adresse IP présentent une portion commune inférieure ou égale à une longueur choisie. Ceci est intéressant dans des réseaux étendus ou hiérarchisés disposant, par exemple, de niveaux nationaux et régionaux.

D'une manière générale tout critère de sélection supplémentaire peut être envisagé dès lors qu'il repose sur des définitions dont les données peuvent être stockées dans le noeud SGSN, et de préférence dans sa mémoire cache MC.

Le module de gestion MG peut appliquer aux adresses IP, contenues dans l'ensemble reçu, le(s) critère(s) de sélection supplémentaire(s) avant, après ou entre les critères de proximité et de disponibilité, selon le mode de réalisation choisi et selon le type de critère de sélection supplémentaire concerné.

Le module de gestion MG d'un noeud SGSN selon l'invention peut être réalisé sous la forme de circuits électroniques, de modules logiciels (ou informatiques), ou d'une combinaison de circuits et de logiciels.

L'invention ne se limite pas aux modes de réalisation de noeud SGSN et de procédé de détermination de noeud(s) GGSN décrits ci-avant, seulement à titre d'exemple, mais elle englobe toutes les variantes que pourra envisager l'homme de l'art dans le cadre des revendications ci-après.

## Revendications

1. Noeud de type SGSN (SGSN1) pour un réseau de coeur (CN) d'un réseau de communication mobile (R1) comportant un réseau fédérateur (RF) hébergeant un serveur de noms de domaine (DNS) stockant des identifiants de noms de point d'accès à au moins un réseau de communication externe (R2), en correspondance d'adresses IP de noeuds GGSN dans chacun desquels est activé au moins un nom de point d'accès (APN), **caractérisé en ce qu'**il comprend des moyens de gestion (MG) agencés, en cas de réception d'une requête d'activation de contexte PDP contenant un identifiant de nom de point d'accès (APN) et provenant d'une station mobile (MSj), pour générer à destination dudit serveur (DNS) une demande requérant la transmission d'un ensemble d'adresses IP de noeuds GGSN dans lesquels est activé le nom de point d'accès (APN) désigné dans ladite requête reçue, puis, à réception dudit ensemble, pour sélectionner l'une au moins des adresses IP de noeud GGSN qu'elle contient en fonction au moins d'un critère de proximité choisi et d'un critère de disponibilité choisi, de manière à permettre l'activation d'un contexte PDP entre ladite station mobile (MSj) et ledit noeud GGSN (GGSN1) dont l'adresse IP a été sélectionnée.

2. Noeud selon la revendication 1, **caractérisé en ce que** lesdits moyens de gestion (MG) sont agencés pour comparer le préfixe de l'adresse IP associée audit noeud SGSN (SGSN1) au préfixe d'adresse IP de chaque noeud GGSN dudit ensemble reçu, et pour sélectionner l'adresse IP, du noeud GGSN (GGSN1) qui satisfait au moins audit critère de disponibilité, et dont le préfixe présente la plus grande portion commune avec le préfixe dudit noeud SGSN (SGSN1).

3. Noeud selon la revendication 2, **caractérisé en ce que** lesdits moyens de gestion (MG) sont agencés pour comparer lesdits préfixes de manière à établir une liste d'adresses IP de noeuds GGSN, classées en fonction des longueurs des portions communes que présentent leur préfixes respectifs avec ledit préfixe dudit noeud SGSN (SGSN1), puis pour sélectionner dans ladite liste l'adresse IP la mieux classée parmi celles associées à un noeud GGSN satisfaisant au moins audit critère de disponibilité.

4. Noeud selon l'une des revendications 2 et 3, **caractérisé en ce que** lesdits moyens de gestion (MG) sont agencés, en l'absence de portion commune, pour attribuer audit noeud SGSN (SGSN1) une adresse IP nulle et factice, puis pour comparer le préfixe de cette dernière au préfixe d'adresse IP de chaque noeud GGSN dudit ensemble reçu, et pour sélectionner plusieurs adresses IP de noeuds GGSN qui satisfont au moins audit critère de disponibilité, de manière à permettre l'activation de contextes PDP entre ladite station mobile (MSj) et chaque noeud GGSN dont l'adresse IP a été sélectionnée, en vue d'une répartition de trafic entre lesdits noeuds GGSN.

5. Noeud selon l'une des revendications 1 à 4, **caractérisé en ce qu'**il comprend des moyens de mémorisation (MC) dans lesquels sont stockées des informations représentatives de l'état de disponibilité de chaque noeud GGSN.

6. Noeud selon l'une des revendications 1 à 5, **caractérisé en ce que** lesdits moyens de gestion (MG) sont agencés pour sélectionner une adresse IP de noeud GGSN en fonction d'au moins un critère supplémentaire choisi dans un groupe comprenant un ensemble de préfixes préférentiels, un ensemble de préfixes interdits, un ensemble de longueurs de portion de préfixe préférentielles, et un ensemble de longueurs de portion de préfixe interdites.

7. Noeud selon la combinaison des revendications 5 et 6, **caractérisé en ce que** lesdits moyens de mémorisation (MC) stockent chaque ensemble participant à un critère supplémentaire de sélection.

8. Procédé de détermination de noeuds de type GGSN pour l'activation de contextes PDP par des noeuds de type SGSN d'un réseau de coeur (CN) d'un réseau de communication mobile (R1) comportant un réseau fédérateur (RF) hébergeant un serveur de noms de domaine (DNS) stockant des noms de point d'accès à au moins un réseau de communication externe (R2), raccordé audit réseau de coeur (CN), en correspondance d'adresses IP de noeuds GGSN dans chacun desquels est activé au moins un nom de point d'accès, **caractérisé en ce qu'**il consiste :
- à transmettre à un noeud SGSN (SGSN1) une requête d'activation de contexte PDP contenant un identifiant de nom de point d'accès (APN) et provenant d'une station mobile (MSj),
- à générer dans ledit noeud SGSN (SGSN1) une demande requérant la transmission d'un ensemble d'adresses IP de noeuds GGSN dans lesquels est activé le nom de point d'accès (APN) désigné dans ladite requête reçue,
- à transmettre ledit message audit serveur (DNS) de sorte qu'il détermine ledit ensemble requis en fonction de l'identifiant de nom de point d'accès (APN) qu'il contient et le transmette audit noeud SGSN (SGSN1),
- à sélectionner dans ledit noeud SGSN (SGSN1), l'une au moins des adresses IP de noeud GGSN, contenues dans ledit ensemble transmis, en fonction au moins d'un critère de proximité choisi et d'un critère de disponibilité choisi, en vue de l'activation d'un contexte PDP entre ladite station mobile (MSj) et ledit noeud GGSN (GGSN1) dont l'adresse IP a été sélectionnée.

9. Procédé selon la revendication 8, **caractérisé en ce que** l'on compare le préfixe de l'adresse IP associée audit noeud SGSN (SGSN1) au préfixe d'adresse IP de chaque noeud GGSN dudit ensemble transmis, et on sélectionne l'adresse IP, du noeud GGSN (GGSN1) qui satisfait au moins audit critère de disponibilité, et dont le préfixe présente la plus grande portion commune avec le préfixe dudit noeud SGSN (SGSN1).

10. Procédé selon la revendication 9, **caractérisé en ce que** l'on compare lesdits préfixes de manière à établir une liste d'adresses IP de noeuds GGSN classées en fonction des longueurs des portions communes que présentent leur préfixes respectifs avec ledit préfixe dudit noeud SGSN (SGSN1), puis on sélectionne dans ladite liste l'adresse IP la mieux classée parmi celles associées à un noeud GGSN satisfaisant au moins audit critère de disponibilité.

11. Procédé selon l'une des revendications 8 à 10, **caractérisé en ce qu'**en l'absence de portion commune, on attribue audit noeud SGSN (SGSN1) une adresse IP nulle et factice, puis on compare le préfixe de cette dernière au préfixe d'adresse IP de chaque noeud GGSN dudit ensemble transmis, et on sélectionne plusieurs adresses IP de noeuds GGSN qui satisfont au moins audit critère de disponibilité, en vue de l'activation de contextes PDP entre ladite station mobile (MSj) et chaque noeud GGSN dont l'adresse IP a été sélectionnée, de manière à répartir le trafic provenant de ladite station mobile (MSj) entre lesdits noeuds GGSN.

12. Procédé selon l'une des revendications 8 à 11, **caractérisé en ce que** l'on sélectionne une adresse IP de noeud GGSN en fonction d'au moins un critère supplémentaire choisi dans un groupe comprenant un ensemble de préfixes préférentiels, un ensemble de préfixes interdits, un ensemble de longueurs de portion de préfixe préférentielles, et un ensemble de longueurs de portion de préfixe interdites.
